# EUROPÄISCHE PATENTANMELDUNG

(11) **EP 3 318 510 A1**
(43) Veröffentlichungstag der Anmeldung: **09.05.2018**
(21) Anmeldenummer: 16197468.8
(22) Anmeldetag: 07.11.2016
(51) Int. Cl.: B65G 1/04, B65D 25/00, G06Q 10/08, B65G 1/07

(54) **VORRICHTUNG ZUM LAGERN UND KOMMISSIONIEREN VON ARTIKELN, INSBESONDERE KLEINTEILEN**

(71) Anmelder: WITRON Logistik + Informatik GmbH, 92711 Parkstein (DE)
(72) Erfinder: Winkler, Walter, 92711 Parkstein (DE)
(74) Vertreter: Betten & Resch

(57) **Zusammenfassung**

Eine Vorrichtung zum Lagern und Kommissionieren von Artikeln, insbesondere von Kleinteilen, wobei die Artikel in Verpackungsmodulen (50) verpackt gelagert werden, und wobei verschiedene vordefinierte Verpackungsmodul-Typen mit unterschiedlichen Grundflächenmaßen einer bestimmten Rasterung vorgesehen sind, weist eine Vielzahl von Lagermagazinen (60) zur Aufnahme der Verpackungsmodule (50) auf, wobei verschiedene Lagermagazin-Typen vorgesehen sind, aufweisend ein oder mehrere Lagerschächte (61) dimensioniert zur Aufnahme von Lagermodulen (50) der verschiedenen Lagermodul-Typen, wobei die unterschiedlichen lagermagazin-Typen jeweils gleiche Grundflächenmaße aufweisen. Die Erfindung ermöglicht eine automatisierte Lagerung und Kommissionierung der gelagerten Artikel und gleichzeitig eine hohe Lagerdichte.

## Beschreibung

### Gebiet der Erfindung

Die Erfindung betrifft eine Lagervorrichtung zum Lagern und Kommissionieren von Artikeln, insbesondere von Kleinteilen.

### Hintergrund der Erfindung

In automatisierten Logistiksystemen ist es erforderlich, dass einerseits die verpackten Waren sicher und mit hoher Verfügbarkeit gefördert, gehandhabt, und kommissioniert werden können und andererseits eine möglichst hohe Lagerdichte erzielt wird.

Aus dem Stand der Technik sind beispielsweise Kommissionier-Automaten wie etwa Schacht-Kommissionierer bekannt, bei denen für jeden Artikel ein eigener Komissionierschacht vorgesehen ist. Dies verringert die Flexibilität der Anlage und führt immer wieder zu Leerständen und damit einer suboptimalen Lagerdichte.

Aufgabe der Erfindung ist es daher, eine Vorrichtung zum Lagern und Kommissionieren von Artikeln, insbesondere von Kleinteilen, vorzuschlagen, die eine möglichst weitgehend automatisierte Handhabung der Artikel einschließlich Kommissionierung derselben bei gleichzeitig hoher Lagerdichte ermöglicht.

### Zusammenfassung der Erfindung

Erfindungsgemäß wird diese Aufgabe gelöst durch eine Vorrichtung zum Lagern und Kommissionieren von Artikeln, insbesondere von Kleinteilen, wobei die Artikel in Verpackungsmodulen verpackt gelagert werden, und wobei verschiedene vordefinierte Verpackungsmodul-Typen mit unterschiedlichen Grundflächenmaßen einer bestimmten Rasterung vorgesehen sind, aufweisend eine Vielzahl von Lagermagazinen zur Aufnahme der Verpackungsmodule, wobei verschiedene Lagermagazin-Typen vorgesehen sind, aufweisend ein oder mehrere Lagerschächte dimensioniert zur Aufnahme von Lagermodulen der verschiedenen Lagermodul-Typen, wobei die unterschiedlichen Lagermagazin-Typen jeweils gleiche Grundnächenmaße aufweisen.

Die vorliegenden Erfindung erlaubt eine durchgehend automatisierte Handhabung und Kommissionierung der in den standardisierten Verpackungsmodulen gelagerten Artikeln und ermöglicht durch die an die standardisierten Verpackungsmodule angepassten standardisierten Lagermagazine eine hohe Lagerdichte.

Die erfindungsgemäßen Lagermagazine sind für handelsübliche automatische Förder- und Lagersysteme wie z. B. Paletten- oder Behälter-Förderanlagen geeignet. Dadurch können zum Transport und zur Lagerung standardisierte Systeme verwendet werden.

Vorzugsweise passt für jeden Lagermagazin-Typ jeweils eine ganze Zahl von Lagerschächten zur passgenauen Aufnahme von Verpackungsmodulen eines Typs passgenau auf die Grundfläche des Lagermagazins. So wird für jeden Verpackungsmodul-Typ die Grundfläche des Lagermagazins optimal genutzt und daher die Lagerdichte weiter erhöht.

Die identische Außenkörper aufweisenden unterschiedlichen Lagermagazin-Typen mit unterschiedlichen, austauschbaren, an die entsprechenden Verpackungsmodul-Typen angepassten Lagerschacht-Einsätzen erhöhen die Flexibilität des Lagers und damit auch die im Mittel erzielbare Lagerdichte.

Die Lagermagazine sind dabei vorzugsweise mit der im Lager vorgesehenen Fördertechnik wie Regalfahrzeugen und Endlosförderern verfahrbar und können so flexibel gelagert und den Kommissionierstationen zugeführt werden. Die Abmessungen der Lagermagazine können dabei an die Dimensionen einer bereits im Lager vorhandenen Fördertechnik angepasst werden.

Die Lagermagazine werden vorzugsweise automatisiert mit den Verpackungsmodulen befüllt. Eine manuelle Befüllung und Entnahme der Magazine ist für Sonderfälle jedoch ebenfalls möglich.

Vorzugsweise weisen die Lagermagazine am Boden jedes Lagerschachts eine Öffnung zum Durchschieben von Hubstiften zur Entnahme von in dem Lagermagazin gelagerten Artikeln auf. Dies ermöglicht eine automatisierte Entnahme/Kommissionierung der in dem Lagermagazin gelagerten Verpackungsmodule.

Vorzugsweise sind die Verpackungsmodule im Lager ausschließlich liegend bewegbar, so dass eine Beschädigung der Verpackungen vermieden werden kann. Vorzugsweise kann eine einzige standardisierte Verpackung von der Herstellung über die Lagerung und Distribution bis zur Auslieferung an den Endkunden verwendet werden.

!Aufgrund ihrer identischen Außenmaße sind die Lagermagazine aufeinander stapelbar ausgebildet, was sich wiederum vorteilhaft auf die Lagerdichte auswirkt. Vorzugsweise sind Lagermagazine desselben Lagermagazin-Typs in unterschiedlichen Bauhöhen vorgesehen, um Artikel unterschiedlicher Bauhöhen aufzunehmen.

Vorzugsweise befindet sich in jedem Verpackungsmodul jeweils nur ein einziger Artikel bzw. eine Verkaufseinheit des Artikels, wodurch die Lagerverwaltung vereinfacht wird.

Vorzugsweise sind die Verpackungsmodule als Kartonverpackungen ausgebildet, wobei die jeweilige Höhe der Verpackungsmodule durch entsprechende Fixierung eines aufgeschobenen Kartondeckels angepasst wird. Insbesondere kann dabei zur Optimierung der Ladungsdichte die Innenhöhe des Verpackungsmoduls gleich der maximalen Höhe des darin verpackten Artikels gewählt werden.

Ein zu lagernder Artikel kann bereits beim Hersteller oder Lieferanten oder alternativ bei der Anlieferung zum Lager in ein Verpackungsmodul einer der standardisierten, vordefinierten Verpackungsmodul-Typen verpackt werden.

### Figurenbeschreibung

Die Erfindung wird nachstehend anhand von Ausführungsbeispielen unter Bezugnahme auf die Zeichnungen im Einzelnen beschrieben. Dabei zeigt:
- Fig. 1a): eine schematische Darstellung des Aufbaus eines Ausführungsbeispiels einer erfindungsgemäßen Lagervorrichtung;
- Fig. 1b): eine schematische Darstellung des Kommissionierbereichs eines Ausführungsbeispiels einer erfindungsgemäßen Lagervorrichtung;
- Fig. 2: ein Flussdiagramm eines Ausführungsbeispiels eines erfindungsgemäßen Verfahrens zur Lagerung von Artikeln;
- Fig. 3: ein Flussdiagramm weiterer Verfahrensschritte des in Fig. 2 gezeigten Ausführungsbeispiels eines erfindungsgemäßen Verfahrens zur Lagerung von Artikeln;
- Fig.4.: eine schematische Darstellung von Ausführungsbeispielen standardisierter Verpackungsmodule eines ersten und eines zweiten erfindungsgemäßen Verpackungsmodul-Typs;
- Fig. 5: eine schematische Darstellung von Ausführungsbeispielen standardisierter Verpackungsmodule eines dritten und eines vierten erfindungsgemäßen Verpackungsmodul-Typs;
- Fig. 6: eine schematische Darstellung von Ausführungsbeispielen standardisierter Verpackungsmodule eines fünften und eines sechsten erfindungsgemäßen Verpackungsmodul-Typs;
- Fig. 7: eine schematische Darstellung eines Ausführungsbeispiels eines Lagermagazins eines ersten erfindungsgemäßen Lagermagazin-Typs;
- Fig. 8: eine schematische Darstellung eines Ausführungsbeispiels eines Lagermagazins eines zweiten erfindungsgemäßen Lagermagazin-Typs;
- Fig. 9: eine schematische Darstellung eines Ausführungsbeispiels eines Lagermagazins eines dritten erfindungsgemäßen Lagermagazin-Typs;
- Fig. 10: eine schematische Darstellung eines Ausführungsbeispiels eines Lagermagazins eines vierten erfindungsgemäßen Lagermagazin-Typs;
- Fig. 11: eine schematische Darstellung eines Ausführungsbeispiels eines Lagermagazins eines fünften erfindungsgemäßen Lagermagazin-Typs;
- Fig. 12: eine schematische Darstellung eines Ausführungsbeispiels eines Lagermagazins eines sechsten erfindungsgemäßen Lagermagazin-Typs;
- Fig. 13: eine schematische Darstellung einer Einrichtung zur Entnahme eines Verpackungsmoduls aus einem erfindungsgemäßen Lagermagazin;
- Fig. 14: eine schematische Darstellung von erfindungsgemäßen Verpackungsmodulen, die zu Versandverpackungen zusammengefügt sind; und
- Fig. 16: eine schematische Darstellung zweier beispielhafter, auf Versandladungsträgern gestapelter Ladestapel erfindungsgemäßer Versandverpackungen.

### Detaillierte Beschreibung der Erfindung

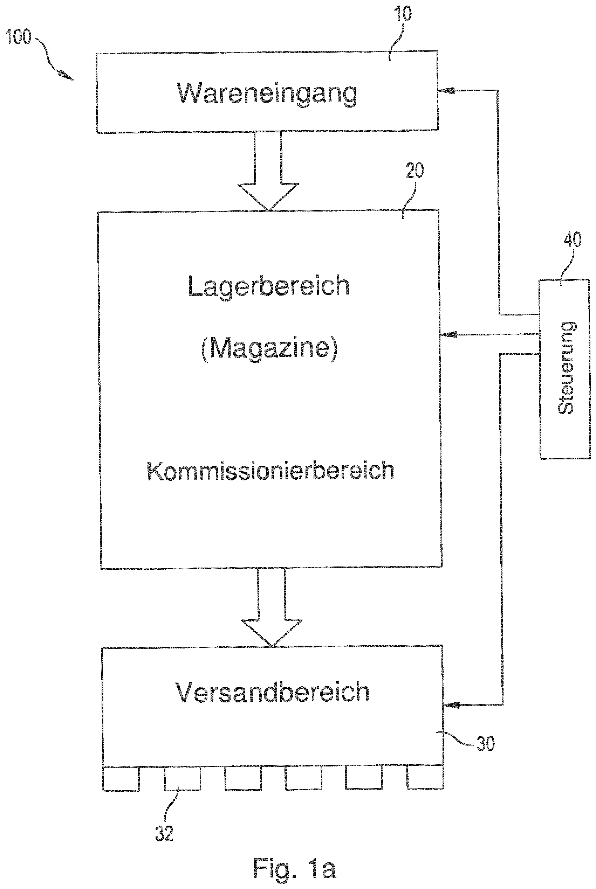

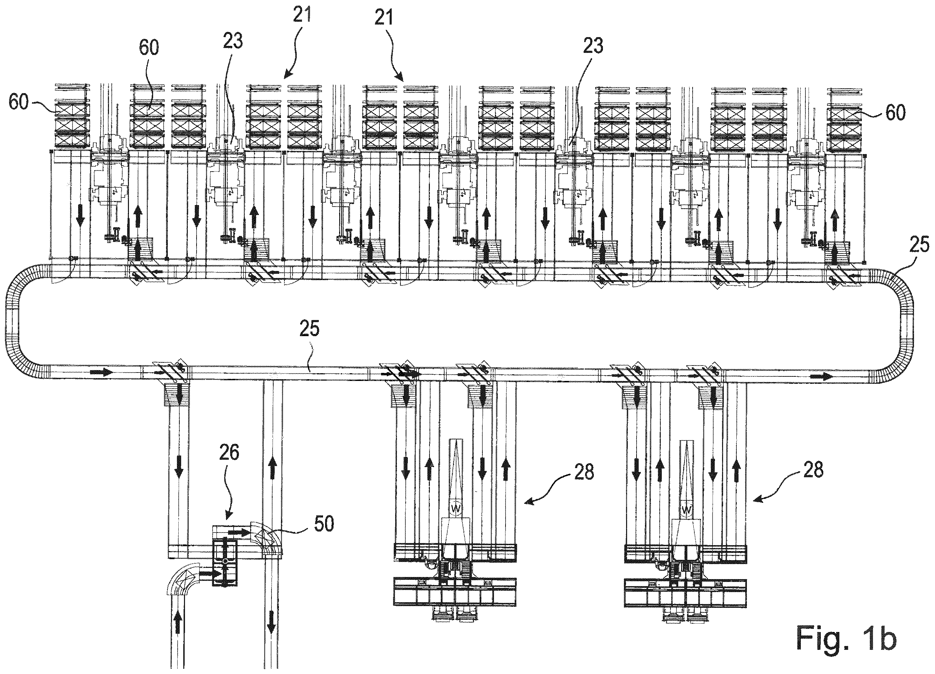

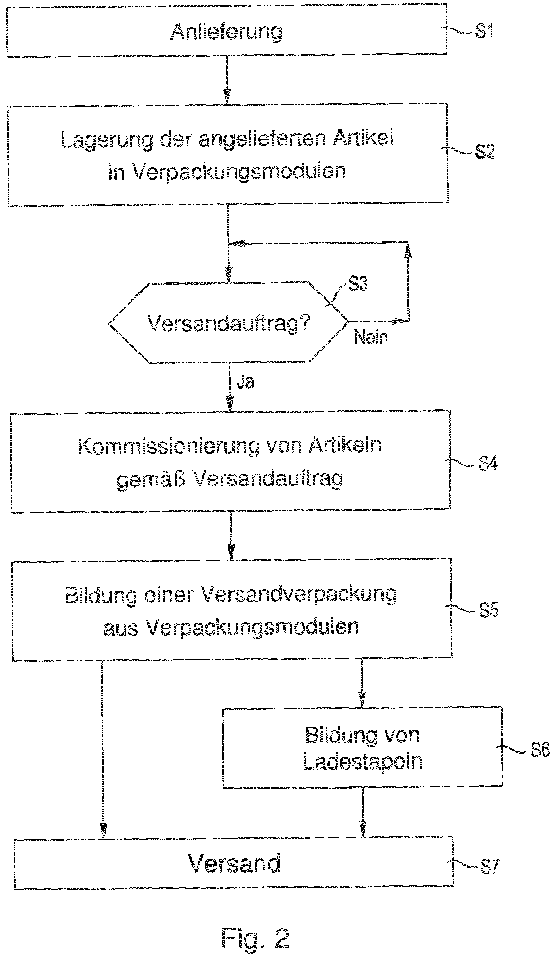

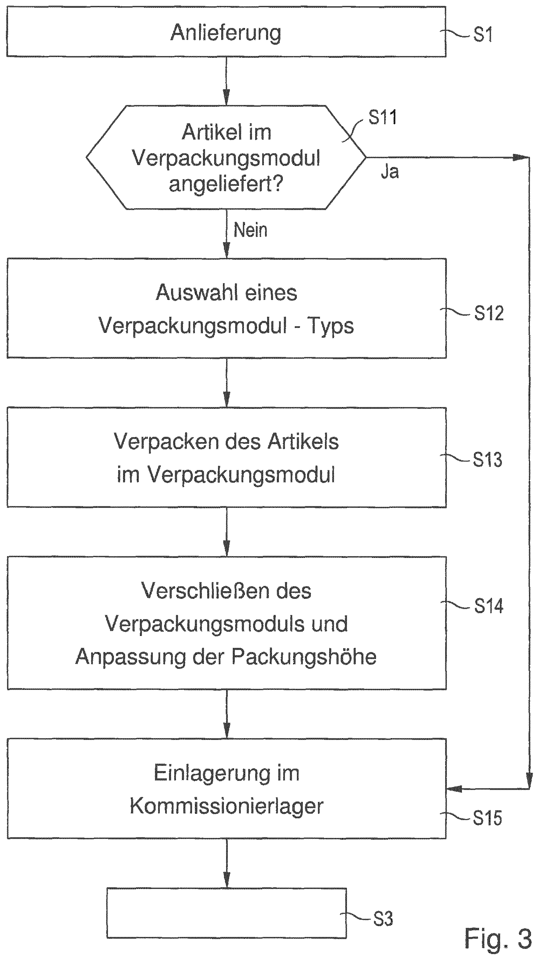

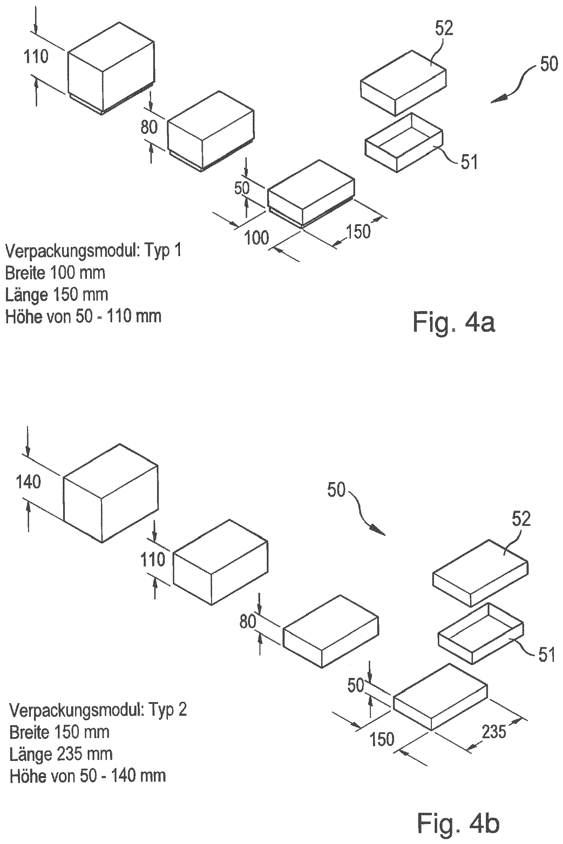

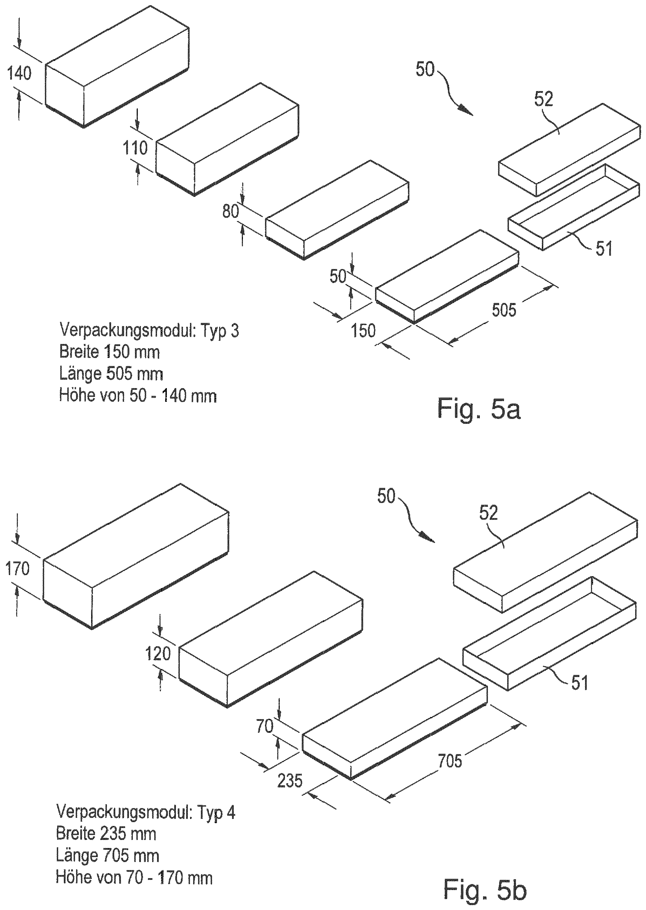

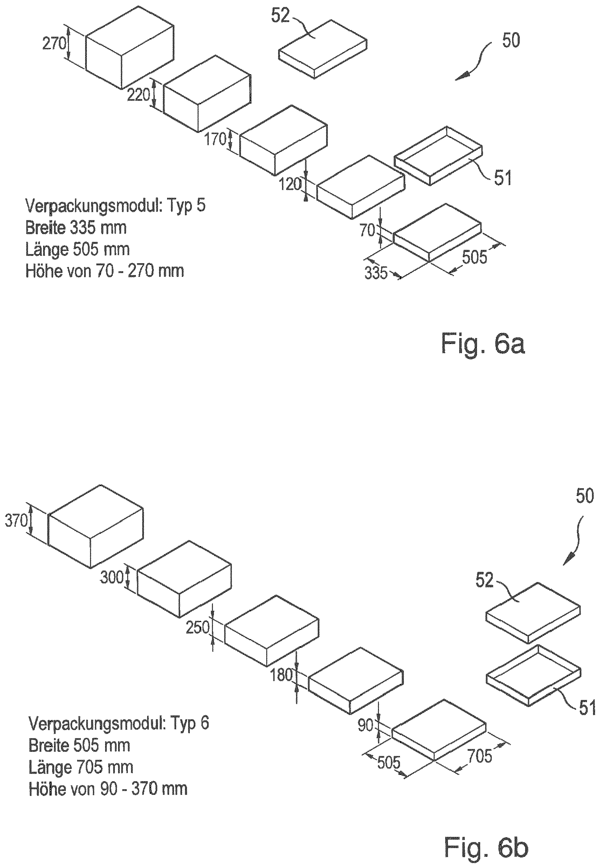

Figur 1 zeigt eine schematische Darstellung eines Ausführungsbeispiels einer erfindungsgemäßen Lagervorrichtung 100 zur Lagerung von Artikeln, insbesondere von Kleinteilen. Die Artikel werden an einem Wareneingang 10 beispielsweise per Lkw oder einem anderen geeigneten Verkehrsmittel angeliefert. Dabei können sich die die Artikel bereits in erfindungsgemäßen, standardisierten Verpackungsmodulen befinden. Ist dies nicht der Fall, werden die Artikel in derartige, erfindungsgemäße Verpackungsmodule umgepackt, wie im Detail anhand der Flussdiagramme der Fig. 2 und 3 erläutert werden wird. Die Verpackungsmodule selbst werden anhand der Figuren 4 bis 7 beschrieben.

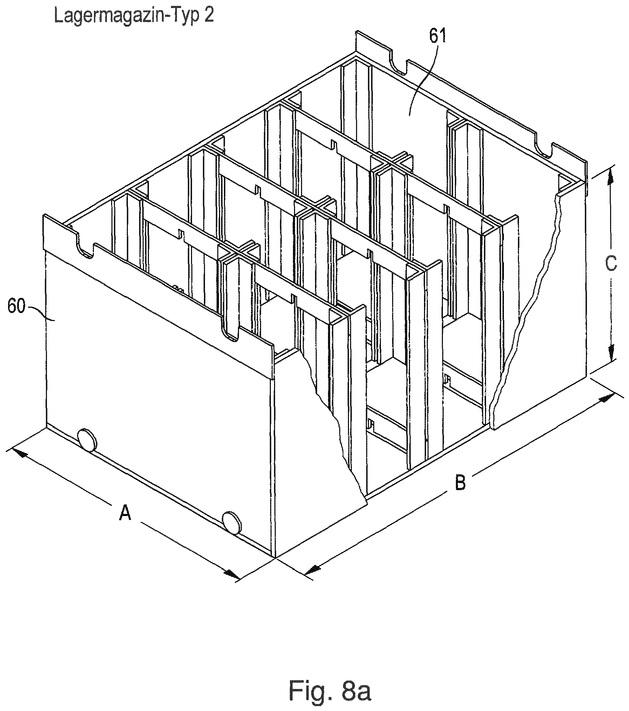

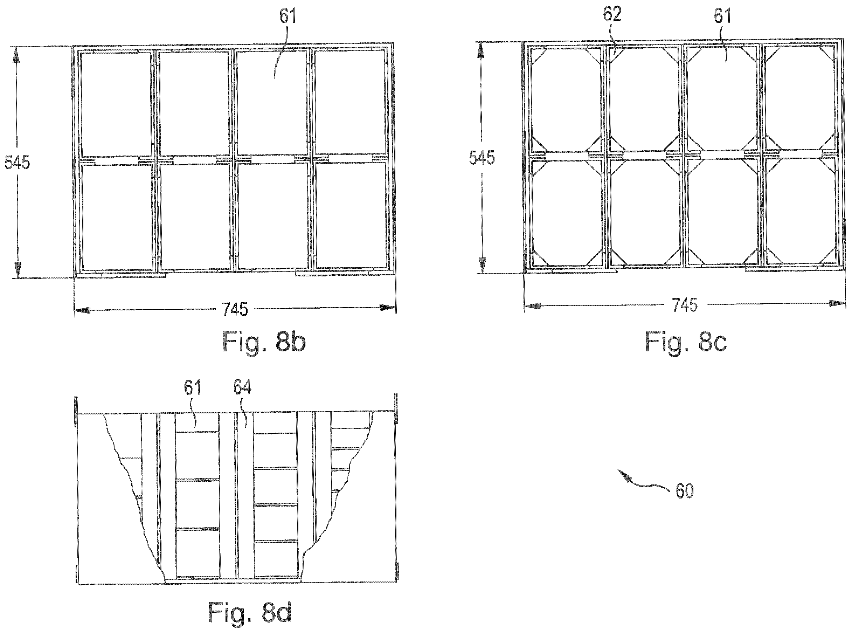

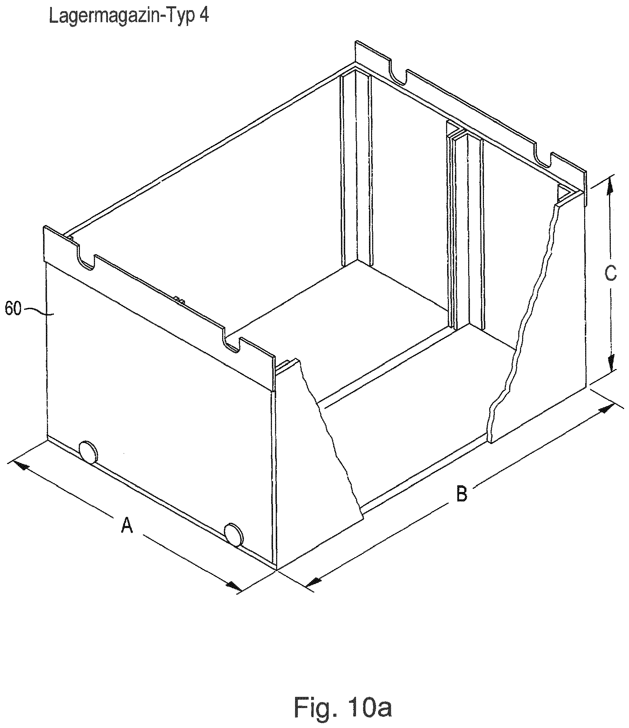

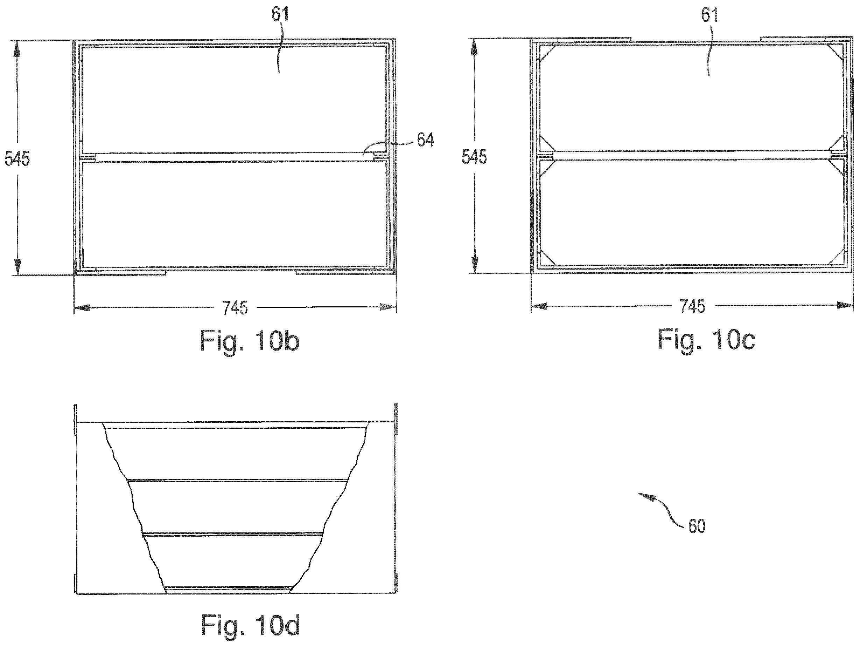

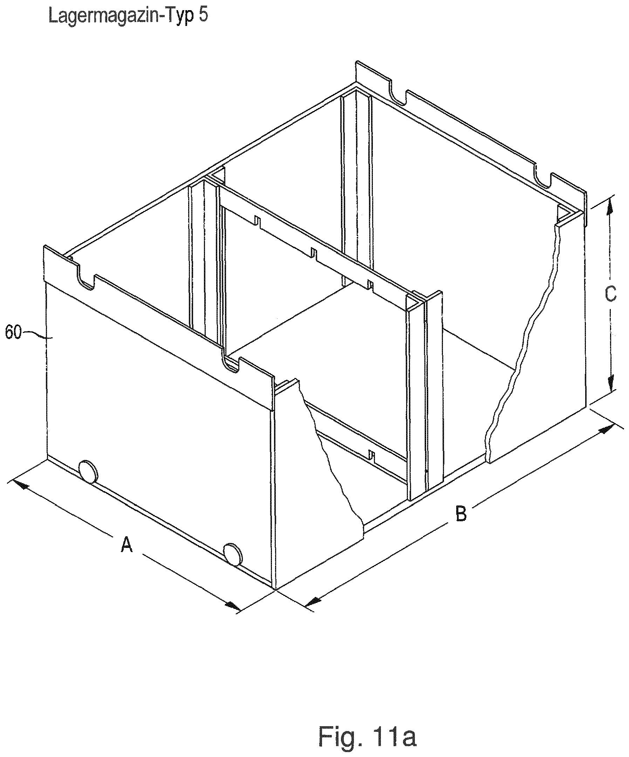

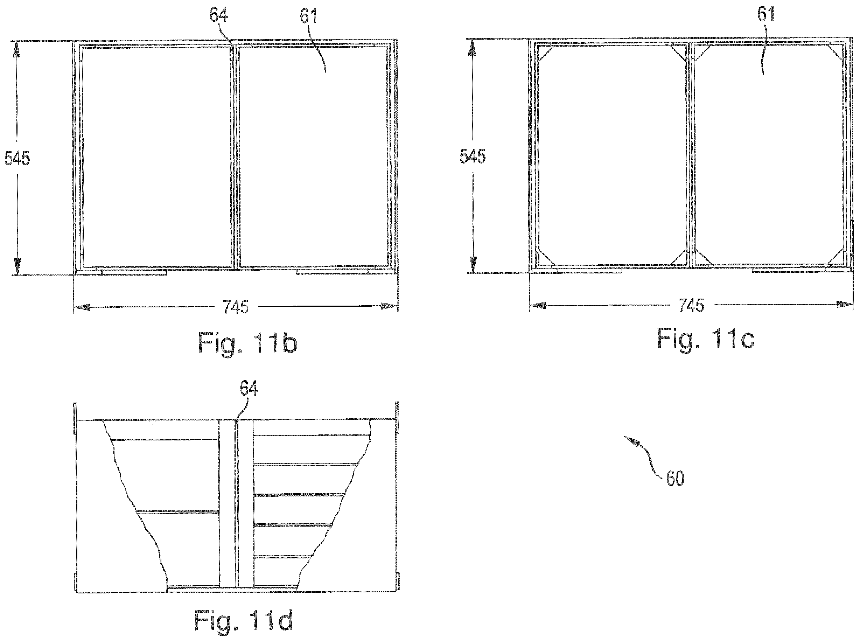

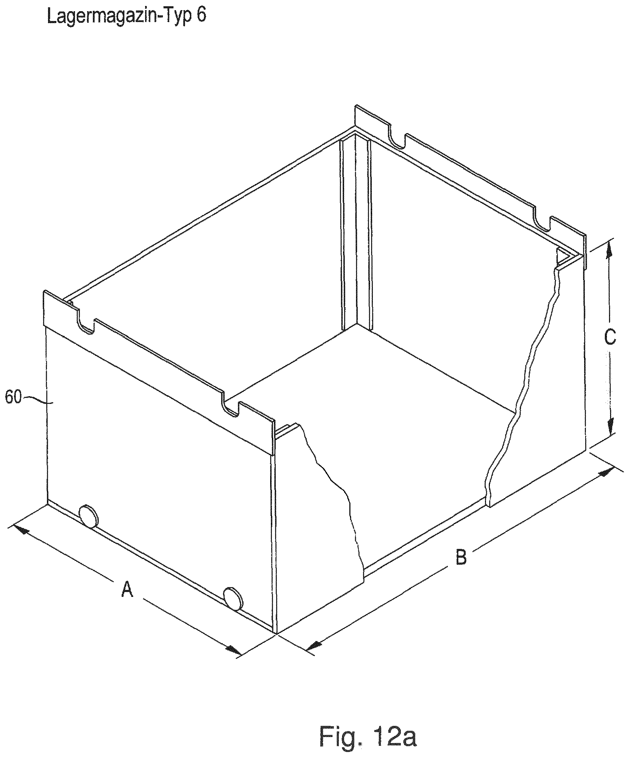

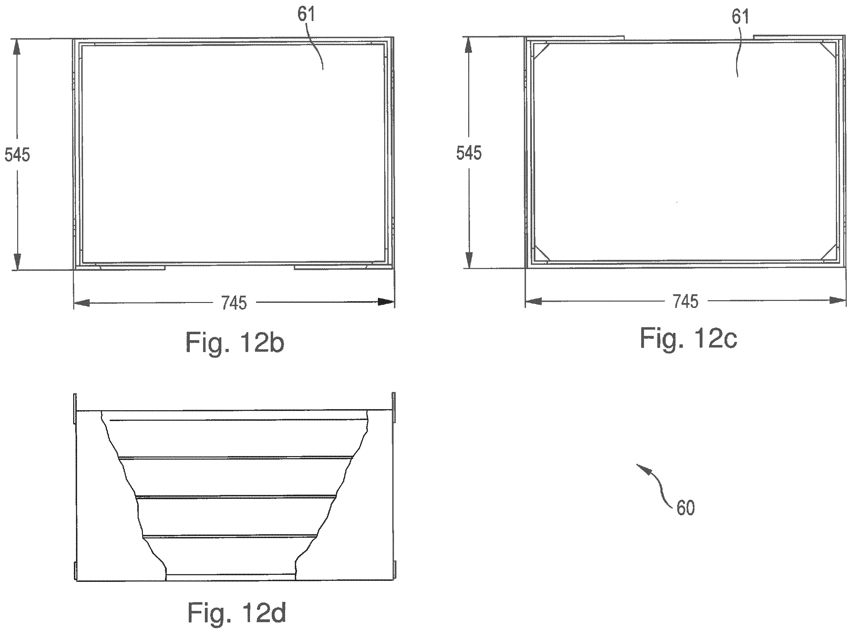

Eine vorzugsweise automatisierte Fördertechnik fördert die in den Verpackungsmodulen befindlichen Artikel in den Lagerbereich 20, in dem die Artikel in an die Maße der Verpackungsmodule 50 angepassten Lagermagazinen 60 (siehe Beschreibung mit Bezugnahme Bezug auf Fig. 8 bis 12) gelagert werden. Dadurch wird eine besonders hohe Lagerdichte erreicht.

Fig. 1b) zeigt schematisch in Aufsicht einen Teil des Lagerbereichs sowie den Kommissionierbereich eines Ausführungsbeispiels einer erfindungsgemäßen Lagervorrichtung. Die Artikel werden in Lagermagazinen 60 gelagert, die wiederum in Lagerregalen 21 untergebracht sind und durch Regalfahrzeuge 23 ein- und auslagerbar sind.

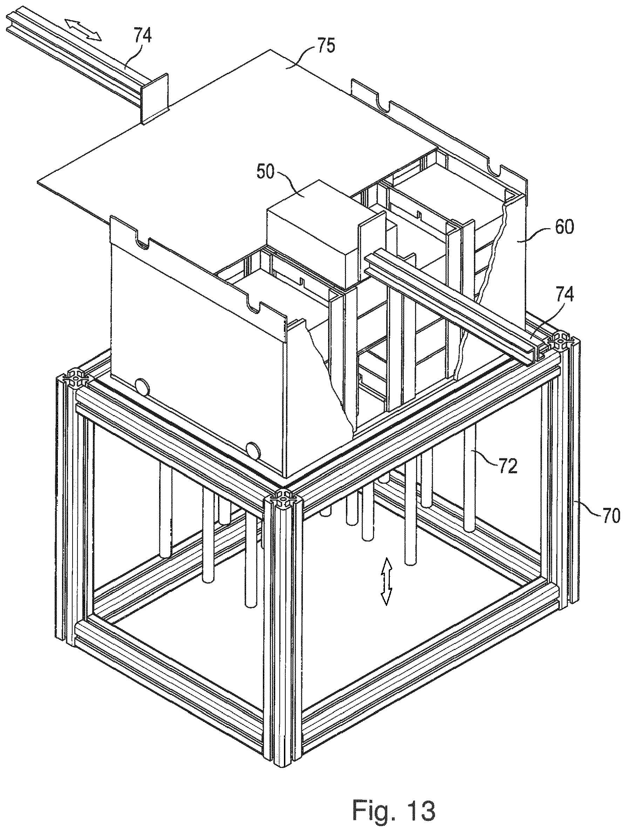

Bei Erfassung eines Versandauftrages werden die entsprechende Artikel enthaltende Lagermagazine 60 mittels eines der Regalfahrzeuge 23 aus dem jeweiligen Regal 21 entnommen, einem Kreisförderer 25 zugeführt und von dort auf eine der Kommissionierstationen 26, 28 verteilt. Bei den Kommissionierstationen 28 handelt es sich um herkömmliche Kommissionierstationen, bei denen die Artikel manuell durch einen Kommissionierer kommissioniert werden, während die Kommissionierstation 26 einen automatisierte Station ist, bei der die gewünschte Anzahl von Verpackungsmodulen mittels einer Hubeinrichtung aus dem Kommissioniermagazin entnommen wird, wie im Folgenden unter Bezugnahme auf Fig. 13 erläutert werden wird. Die vorliegende Erfindung umfasst sowohl die automatisierte als auch die manuelle Kommissionierung. Die erfindungsgemäßen Verpackungsmodule 50 sind jedoch zur Verwendung mit austomatisierten Kommissioniersystemen optimiert. Durch diese Flexibilität kann die Erfindung auch durch die Nachrüstung bestehender Logistikanlagen implementiert werden.

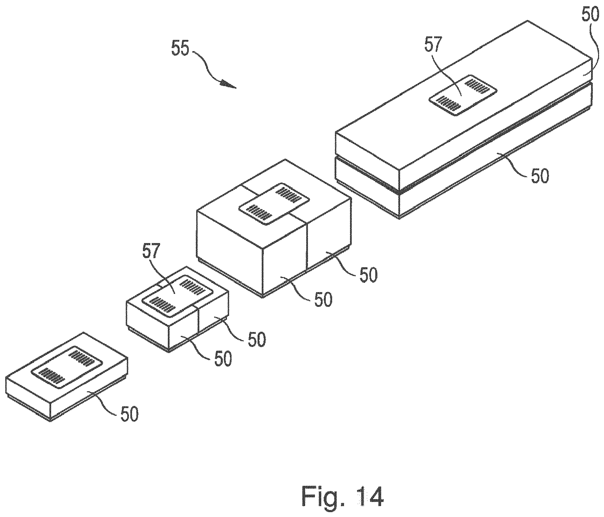

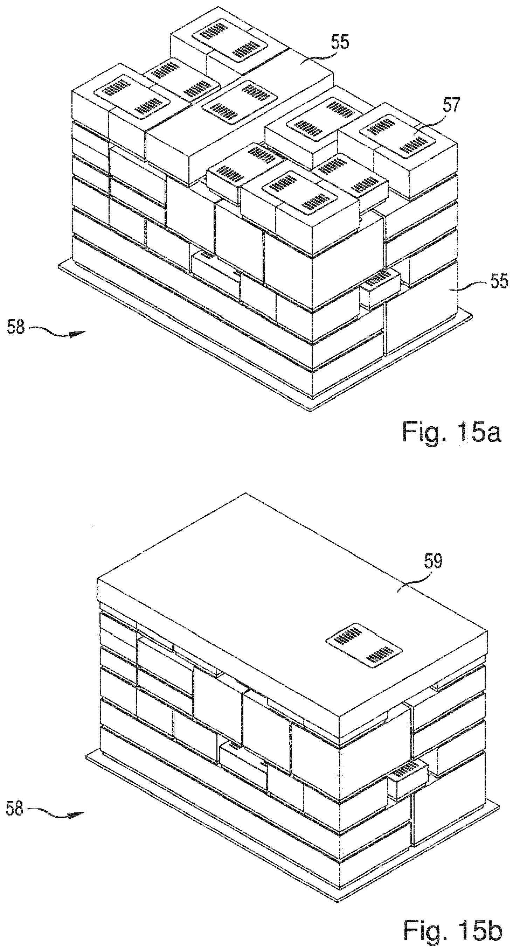

Fig. 13 zeigt schematisch ein Ausführungsbeispiel einer an einer automatischen Kommissionierstation 26 vorgesehenen Entnahmevorrichtung zur Entnahme von Verpackungsmodulen 50 aus den Ladeschächten eines Lagermagazins 60, welches auf einem Gestell 70 aufliegt. Ein Stempel oder Hubstift 72 hebt das Verpackungsmodul 50 aus dem Lagerschacht 61, wo es auf einer Förderebene 75 von einem Pusher 74 ergriffen und ohne manuelle Arbeit zur weiteren Verarbeitung weitertransportiert wird. Dabei erfolgt die Förderung eines Verpackungsmoduls 50 in der gesamten Lagereinrichtung 100 vorzugsweise liegend, d.h. das Verpackungsmodul 50 ist immer von unten unterstützt. Dadurch werden Beschädigungen des Verpackungsmoduls oder des darin gelagerten Artikels vermieden. Die so kommissionierten Verpackungsmodule 50 werden anschliessend mit einer geeigneten, vorzugsweise ebenfalls automatisierten Fördertechnik zu einem Versandbereich 30 gefördert, wo die Verpackungsmodule 50 zu Versandverpackungen 55 zusammengestellt werden (siehe spätere Beschreibung mit Bezugnahme auf Fig. 14 und 15) und an LKW-Rampen 32 ausgeliefert werden.

Die Fig. 2 und 3 sind Flussdiagramme zur Erläuterung eines Ausführungsbeispiels eines erfindungsgemäßen Verfahrens zur Lagerung von Artikeln, insbesondere Kleinteilen.

In einem ersten Verfahrensschritt S1 werden die zu lagernden Artikel (Kleinteile) angeliefert. Wie erwähnt können die Artikel sich dabei bereits in einer erfindungsgemäßen standardisierten Verpackungsmodulen 50 befinden oder nicht (Verfahrensschritt S11 in Fig. 3). Ist der Artikel bereits in einer standardisierten Verpackung, geht das Verfahren weiter zu Schritt S15, in dem das Verpackungsmodul 50 in den Lagerschacht 61 eines Lagermagazins 60 eines dem Verpackungsmodul-Typ zugeordneten Lagermagazin-Typs eingelagert wird.

Befindet sich der angelieferte Artikel nicht in einem standardisierten Lagermodul 50, so werden die Abmessungen des Artikels mittels einer (nicht dargestellten, an sich bekannten) Messvorrichtung erfasst und es wird in Verfahrensschritt S12 ein passender Verpackungsmodul-Typ aus einer Anzahl vordefinierter Verpackungsmodul-Typen ausgewählt, die sich durch ihre Grundflächenabmessungen unterscheiden. Im darauffolgenden Verfahrensschritt S13 wird der Artikel in das Bodenteil 51 (siehe Fig. 4 bis 8) eines Verpackungsmoduls 50 des ausgewählten Verpackungsmodul-Typs gesetzt und anschließend in Schritt S14 das Deckelteil 52 des Verpackungsmoduls 50 aufgesetzt. Das Deckelteil 52 wird in der Position mittels Verklebens oder dgl. auf dem Bodenteil 51 fixiert, in der die Innenhöhe der Verpackung gerade gleich der maximalen Höhe des verpackten Artikels ist, d.h., das Deckelteil 52 sitzt auf dem Artikel auf. Dadurch wird eine minimaler Platzbedarf und somit eine maximale Lagerdichte erreicht. In Verfahrensschritt S15 wird das Verpackungsmodul dann in den Lagerschacht 61 eines Lagermagazins 60 eines dem Verpackungsmodul-Typ zugeordneten Lagermagazin-Typs eingelagert, wo dieses bis zur Erfassung eines entsprechenden Versandauftrages lagert (Verfahrensschritte S2 und S3 in Fig. 2). Bei Erfassung eines Versandauftrages werden in Schritt S4 die dem Auftrag zugehörigen Artikel automatisiert aus den Lagermagazinen 60 entnommen (siehe Fig. 13) und zu dem Gesamtauftrag zusammengestellt (kommissioniert). Dabei werden die standardisierten Lagermodule 50 auch als Versandverpackung benutzt, bzw. werden zweckmäßig mehrere Packmodule des gleichen Typs oder unterschiedlicher Typen zu Versandverpackungen 55 zusammengesetzt, wie in Fig. 14 gezeigt ist. Die Versandverpackungen 55 können in Verfahrensschritt S7 entweder einzeln versandt oder automatisiert zu versandfertigen Einheiten wie etwa Ladestapeln 58 zusammengestellt werden, wie in Fig. 15 gezeigt ist, die anschließend auf Lkw oder dgl. ausgeliefert werden. Zur Vervollständigung einer versandfertigen Einheit 55 können dabei auch leere Verpackungsmodule oder Deckelteile 59 verwendet werden.

Die Ausgestaltung der erfindungsgemäßen standardisierten Verpackungsmodule 50 ist beispielhaft in den Fig. 4 - 6 gezeigt. Ein Verpackungsmodul 50 besteht aus einem Bodenteil 51 mit einem gerasterten, standardisierten Bodenmaß und einem aufschiebbaren Deckelteil 52, dessen Fixierung am Bodenteil 51 die Höhe des Verpackungsmoduls in Abhängigkeit des gelagerten Artikels bestimmt. Die Rasterung der Bodenmaße ist so gewählt, dass einerseits die Schmalseitenlänge a eines größeren Verpackungsmodul-Typs gleich der Längsseitenlänge b eines kleineren Verpackungsmodul-Typs ist. Es gibt somit einen Satz Rastermaße L₁, L₂, L₃, ..., Lₙ, die sowohl für die Schmalseiten als auch für die Längsseiten gewählt werden. Dadurch können standardisierte Verpackungsmodule auch verschiedener Typen (Größen) zu einer bündigen Versandverpackung verbunden werden (siehe Fig. 14 und 15). Außerdem ist die Bildung von ladungsdichteoptimierten Packstapeln 58 erleichtert, wie in Fig. 15 illustriert ist. Darüber hinaus können die so gerasterten Verpackungsmodule 50 optimal in die entsprechend dimensionierten Lagermagazine 60 eingepasst werden, die jeweils unterschiedliche Einsätze 62, aber identische Außenmaße aufweisen. So wird ein flexibles Lager hoher Lagerdichte ermöglicht.

Im vorliegenden Ausführungsbeispiel sind die Rastermaße wie folgt gewählt:
L₁ = 100 mm, L₂ = 150 mm, L₃ = 235 mm, L₄ = 335 mm, L₅ = 505 mm, L₆ = 705 mm.

Die minimale Länge L1 ist dabei typischerweise durch die Mindestgröße eines Etikettenaufklebers oder dgl. eines Transportdienstleisters bestimmt. Selbstverständlich ist die Erfindung jedoch nicht auf diese speziellen Maße beschränkt.

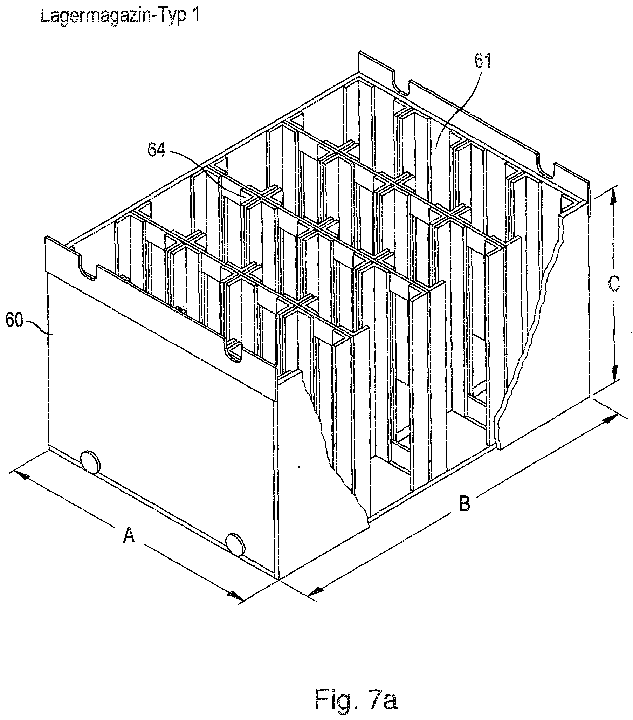

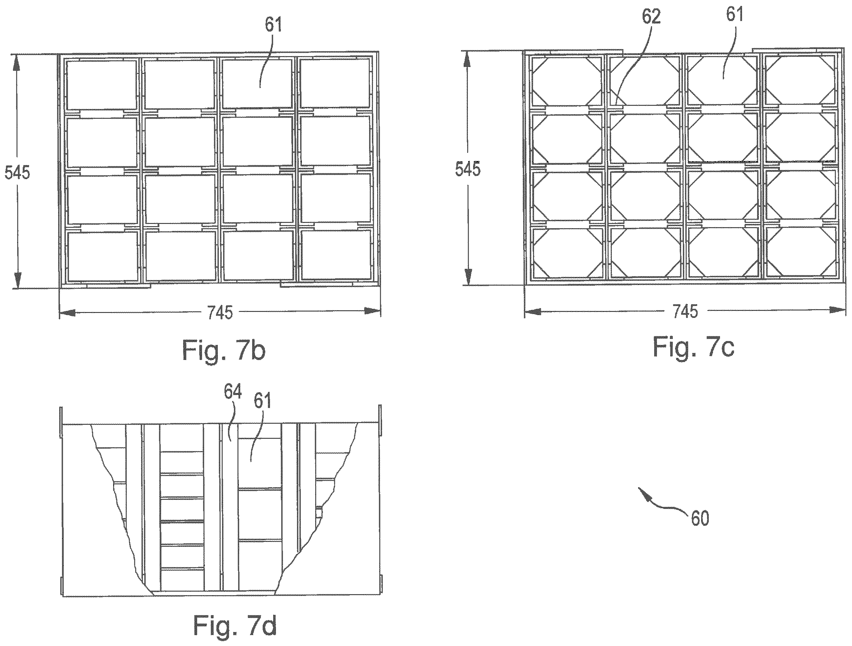

Die Fig. 7 - 12 zeigen schematisch Ausführungsbeispiele von erfindungsgemäßen Lagermagazinen 60 eines ersten bis sechsten Lagermagazin-Typs, die alle die gleichen Außenabmessungen haben. Die Fig. 7a) - 12a) zeigen dabei die eine perspektivische Ansicht der jeweiligen Lagermagazine, die Fig. 7b) - 12b) eine Aufsicht mit eingesetzten Einsätzen 64, die Fig. 7c) - 12c) eine Aufsicht ohne Einsätze 64, und die Fig. 7c) - 12c) eine teilweise aufgeschnittene Seitenansicht. Vorzugsweise bestehen die Lagermagazine aller Lagermagazin-Typen aus dem gleichen Außenkörper, in welche unterschiedliche, an die verschiedenen Verpackungsmodul-Typen angepasste Einsätze 64 einschiebbar sind, die eine entsprechende Anzahl von Lagerschächten 61 zur Aufnahme der Verpackungsmodule 50 aufweisen. Die Einsätze 64 weisen am Boden jedes Lagerschachts 61 mit einer Öffnung versehene seitliche Halterungen 62 zum Halten des darin befindlichen Verpackungsmoduls 50 auf. Die gebildete Öffnung dient zum Herausheben des Lagermoduls mittels eines Hubstifts 72 (Fig. 13).

Durch die austauschbaren Einsätze 64 können die Lagermagazine 60 sehr flexibel an die jeweils zu lagernden Produkte angepasst werden, so dass immer eine optimale Lagerdichte erreicht wird. Durch die identische Außenmasse können mehrere Lagermagazine 60 aufeinander gestapelt werden, was wiederum die Lagerdichte erhöht. Vorzugsweise können die Lagermagazine 60 aller Lagermagazin-Typen in verschiedenen Bauhöhen zur Anpassung an unterschiedliche Artikel- und damit Verpackungshöhen vorgesehen sein.

Das in Fig. 7 gezeigte Lagermagazin 60 des ersten Lagermagazin-Typs ist so dimensioniert, dass es 16 Lagerschächte 61 aufweist, deren Grundmaße an die passgenaue Aufnahme jeweils eines Verpackungsmoduls des Typs 1 mit Grundflächenmassen von 100 mm x 150 mm angepasst ist. Entsprechend ist das in Fig. 8 gezeigte Lagermagazin 60 des zweiten Lagermagazin-Typs so dimensioniert, dass es 8 Lagerschächte 61 aufweist, deren Grundmaße an die passgenaue Aufnahme jeweils eines Verpackungsmoduls des Typs 2 mit Grundflächenmassen von 150 mm x 235 mm angepasst ist.

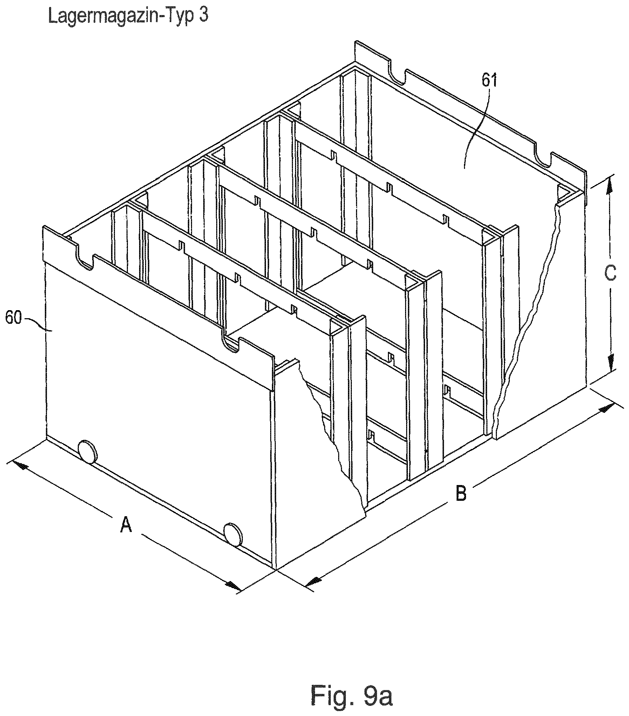

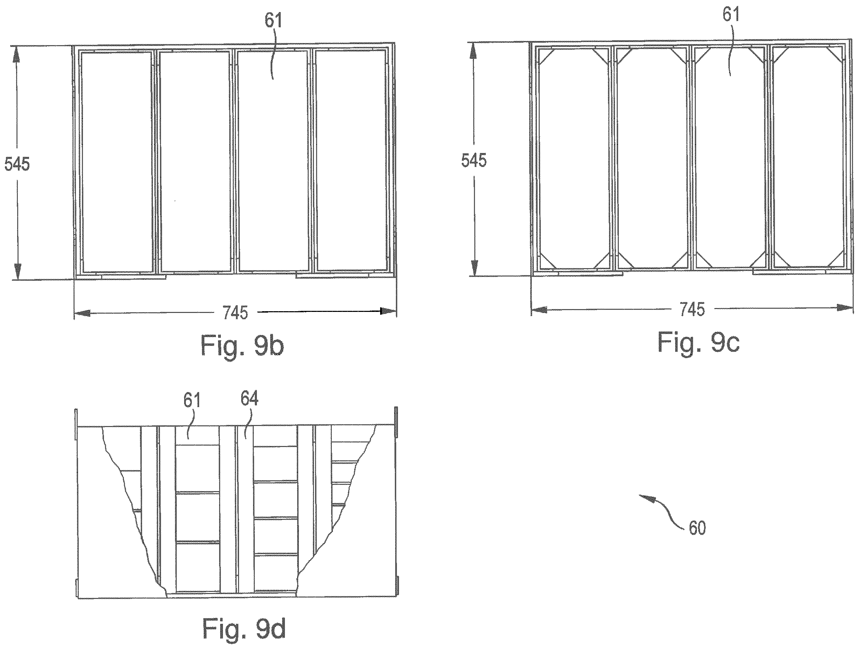

Entsprechend ist das in Fig. 9 (10, 11, 12) gezeigte Lagermagazin des 3. (4., 5., 6.) Lagermagazin-Typs so dimensioniert, dass es 4 (2, 2, 1) Lagerschächte 61 aufweist, deren Grundmaße an die passgenaue Aufnahme jeweils eines Verpackungsmoduls des Typs 3 (4, 5, 6) mit Grundflächenmassen von 150 mm x 505 mm (235 mm x 705 mm, 335 mm x 505 mm, 505 mm x 705 mm) angepasst ist.

In allen Fällen passt für jeden Lagermagazin-Typ jeweils eine ganze Zahl von Verpackungsmodulen 50 ohne "Platzverschwendung" in die Lagerschächte 61.

Fig. 14 zeigt schematisch die Verbindung von einem oder mehreren Verpackungsmodulen 50 zu einer Versandverpackung 55. Die Verpackungsmodule können dabei durch Verkleben, Umwickeln mit Folie, oder auf andere Art und Weise miteinander verbunden werden. Etiketten 57 können dabei zur Verklebung beitragen. Vorzugsweise können in zwischen miteinander verbundenen Verpackungsmodulen 50 gebildeten Zwischenräumen Begleitpapiere wie Lieferscheine, Werbematerial etc. untergebracht werden.

Fig. 15a) zeigt schematisch eine Vielzahl von Versandverpackungen 55, die zu einem Ladestapel 58 geschichtet sind, der auf einem Ladungsträger wie etwa einer Palette aufliegt. In Fig. 15b) ist zusätzlich noch eine Abdeckung 59 des Ladestapels 58 gezeigt. Durch die modularen Rastermaße der Verpackungsmodule 50 können erfindungsgemäß vorteilhaft stabile und raumeffiziente Ladestapel 58 gebildet werden.

Die Erfindung schlägt somit eine Vorrichtung zum Lagern und Kommissionieren von Artikeln, insbesondere von Kleinteilen vor, die einerseits eine möglichst weitgehend automatisierte Handhabung der in standardisierten Verpackungsmodulen gelagerten Artikel von der Einlagerung über die Kommissionierung bis zum Versand ermöglichen, dabei aber gleichzeitig eine hohe Lagerdichte erreichen.

## Patentansprüche

1. Vorrichtung zum Lagern und Kommissionieren von Artikeln, insbesondere von Kleinteilen, wobei die Artikel in Verpackungsmodulen (50) verpackt gelagert werden, und wobei verschiedene vordefinierte Verpackungsmodul-Typen mit unterschiedlichen Grundflächenmaßen einer bestimmten Rasterung vorgesehen sind,
aufweisend eine Vielzahl von Lagermagazinen (60) zur Aufnahme der Verpackungsmodule (50),
wobei verschiedene Lagermagazin-Typen vorgesehen sind, aufweisend ein oder mehrere Lagerschächte (61) dimensioniert zur Aufnahme von Lagermodulen (50) der verschiedenen Lagermodul-Typen, wobei die unterschiedlichen Lagermagazin-Typen jeweils gleiche Grundflächenmaße aufweisen.

2. Lagervorrichtung nach Anspruch 1, wobei für jeden Lagermagazin-Typ jeweils eine ganze Zahl von Lagerschächten (61) zur passgenauen Aufnahme von Verpackungsmodulen (50) eines Typs passgenau auf die Grundfläche des Lagermagazins (60) passt.

3. Lagervorrichtung nach Anspruch 1 oder 2, wobei die verschiedenen Lagermagazin-Typen identische Außenkörper mit unterschiedlichen, austauschbaren, an die entsprechenden Verpackungsmodul-Typen angepasste Lagerschacht-Einsätze (64) aufweisen.

4. Lagervorrichtung nach einem der vorangehenden Ansprüche, wobei die Lagermagazine (60) mit der im Lager (20) vorgesehenen Fördertechnik (23, 25) verfahrbar sind.

5. Lagervorrichtung nach einem der vorangehenden Ansprüche, wobei die Lagermagazine (60) automatisiert mit Verpackungsmodulen (50) befüllt werden.

6. Lagervorrichtung nach einem der vorangehenden Ansprüche, wobei für jeden Lagerschacht (61) eines Lagermagazins (60) eine Bodenöffnung vorgesehen ist und die Lagermodule (50) mittels Hubstempeln (72) automatisiert aus den Lagerschächten (61) der Lagermagazine (60) entnehmbar sind.

7. Lagervorrichtung nach einem der vorangehenden Ansprüche, wobei die Verpackungsmodule (50) im Lager (100) ausschließlich liegend bewegbar sind.

8. Lagervorrichtung nach einem der vorangehenden Ansprüche, wobei die Lagermagazine (60) aufeinander stapelbar sind.

9. Lagervorrichtung nach einem der vorangehenden Ansprüche, wobei Lagermagazine (60) desselben Lagermagazin-Typs in unterschiedlichen Bauhöhen vorgesehen sind.

10. Lagervorrichtung nach einem der vorangehenden Ansprüche, wobei sich in jedem Verpackungsmodul (50) jeweils nur ein einziger Artikel befindet.

11. Lagervorrichtung nach einem der vorangehenden Ansprüche, wobei die Höhe der Verpackungsmodule (50) entsprechend den Maßen des darin gelagerten Artikels wählbar ist.

12. Lagervorrichtung nach Anspruch 11, wobei die Verpackungsmodule (50) als Kartonverpackungen ausgebildet sind und die jeweilige Höhe der Verpackungsmodule durch entsprechende Fixierung eines aufgeschobenen Kartondeckels (62) realisiert wird.

13. Lagervorrichtung nach Anspruch 11 oder 12, wobei die Innenhöhe des Verpackungsmoduls (50) gleich der maximalen Höhe des darin verpackten Artikels ist.
